# EUROPEAN PATENT APPLICATION

(11) **EP 4 318 061 A1**
(43) Date of publication of application: **07.02.2024**
(21) Application number: 22780568.6
(22) Date of filing: 25.03.2022
(51) Int. Cl.: G02B 6/036, G02B 6/44

(54) **OPTICAL FIBER**

(30) Priority: 29.03.2021 JP 2021056156
(71) Applicant: FURUKAWA ELECTRIC CO., LTD., Tokyo 100-8322 (JP)
(72) Inventor: MUKASA, Kazunori, Tokyo 100-8322 (JP)
(74) Representative: SSM Sandmair
(86) International application number: PCT/JP2022/014387
(87) International publication number: WO 2022/210355

(57) **Abstract**

An optical fiber includes a core portion; and a cladding portion that surrounds an outer periphery of the core portion, that has a refractive index lower than a maximum refractive index of the core portion, and that includes a dopant to reduce the refractive index. The core portion includes a center core in which an average refractive index is maximized in the optical fiber. A relative refractive-index difference of the average refractive index of the center core with respect to an average refractive index of the cladding portion is equal to or higher than 0.20% and equal to or lower than 0.50%, an outer diameter of the cladding portion is equal to or larger than 70 µm and equal to or smaller than 120 µm, a cable cutoff wavelength is equal to or smaller than 1530 nm, and a transmission loss at a wavelength of 1550 nm is equal to or less than 0.18 dB/km.

## Description

### Field

The present invention relates to an optical fiber.

### Background

An optical fiber that achieves ultra-low transmission loss by doping a dopant to reduce the refractive index of glass, such as fluorine, in a cladding portion has been disclosed (Patent Literature 1). In this kind of optical fiber in which the refractive index of the cladding portion is reduced, it is possible to reduce, or almost eliminate a dopant to be doped in a core portion. As a result, the Rayleigh scattering loss originated from concentration distribution of dopant in the core portion is reduced, and an optical fiber with ultra-low transmission loss can thereby be achieved. With this kind of optical fiber, it is possible to achieve a transmission loss of 0.18 dB/km or less at a wavelength of 1550 nm, which has been difficult to be achieved, for example, with an optical fiber having a cladding portion made from silica glass not doped with a dopant to reduce the refractive index.

### Citation List

### Patent Literature

Patent Literature 1: Japanese Patent No. 6690296 Summary

### Technical Problem

However, if fluorine or a dopant that is relatively expensive and difficult to handle, such as boron, which is another dopant that reduces the refractive index of glass, is doped in the cladding portion, there is a problem that the material cost and manufacturing cost of the cladding portion increase, resulting in increased cost for an optical fiber.

The present invention has been achieved in view of the above problem, and it is an object of the present invention to provide an optical fiber that has low transmission loss and is relatively inexpensive.

### Solution to Problem

To solve the above-described problem and achieve the object, an optical fiber according to one aspect of the present invention includes: a core portion; and a cladding portion configured to surround an outer periphery of the core portion, the cladding portion having a refractive index lower than a maximum refractive index of the core portion, and containing a dopant to reduce the refractive index, wherein the core portion includes a center core in which an average refractive index is maximized in the optical fiber, a relative refractive-index difference of the average refractive index of the center core with respect to an average refractive index of the cladding portion is equal to or higher than 0.20% and equal to or lower than 0.50%, an outer diameter of the cladding portion is equal to or larger than 70 µm and equal to or smaller than 120 µm, a cable cutoff wavelength is equal to or smaller than 1530 nm, and a transmission loss at a wavelength of 1550 nm is equal to or less than 0.18 dB/km.

An effective core area at the wavelength of 1550 nm may be equal to or smaller than 150 µm².

The effective core area at the wavelength of 1550 nm may be equal to or larger than 50 µm².

At least a part of the cladding portion may be made from silica glass including any one of fluorine and boron.

The core portion may be made of any one of pure silica glass and silica glass that includes one of chlorine, fluorine, germanium, potassium, and sodium, and includes a center core in which an average refractive index is maximized in the optical fiber.

A coating layer configured to surround an outer periphery of the cladding portion may be included, and an outer diameter of the coating layer may be equal to or smaller than 210 µm.

The coating layer may include a primary layer configured to surround the outer periphery of the cladding portion, and a secondary layer configured to surround an outer periphery of the primary layer, and a thickness of the primary layer may be equal to or larger than 10 µm.

A normalized microbending loss at the wavelength of 1550 nm may be 20 or less, the normalized microbending loss normalized by a microbending loss at the wavelength of 1550 nm of a standard optical fiber that has characteristics compliant with standards defined in ITU-T G.652, and has a coating layer having a thickness of 62.5 µm on an outer periphery of a cladding portion having an outer diameter of 125 µm.

The microbending loss may be a value that is measured by the sandpaper method.

An increase of the transmission loss due to the microbending loss may be equal to or less than 0.0193 dB/km.

A refractive index profile may be a step-index type.

A refractive index profile may be a W-shape type.

A refractive index profile may be a trench type.

A relative refractive-index difference of the average refractive index of the center core with respect to a refractive index of pure silica glass may be equal to or higher than -0.15% and equal to or lower than 0.17%.

A relative refractive-index difference of the average refractive index of the center core with respect to a refractive index of pure silica glass may be equal to or higher than -0.10% and equal to or lower than -0.01%.

A relative refractive-index difference of the average refractive index of the center core with respect to a refractive index of pure silica glass may be equal to or higher than 0.02% and equal to or lower than 0.13%.

A relative refractive-index difference of the average refractive index of the center core with respect to a refractive index of pure silica glass may be equal to or higher than -0.50% and equal to or lower than -0.13%.

The transmission loss may be equal to or lower than 0.175 dB/km.

### Advantageous Effects of Invention

According to the present invention, an effect that an optical fiber that has low transmission loss and is relatively inexpensive can be achieved is produced.

### Brief Description of Drawings

FIG. 1 is a schematic cross-section of an optical fiber according to an embodiment;
FIG. 2A is a schematic diagram of an example of a refractive index profile of the optical fiber according to the embodiment;
FIG. 2B is a schematic diagram of an example of a refractive index profile of the optical fiber according to the embodiment;
FIG. 2C is a schematic diagram of an example of a refractive index profile of the optical fiber according to the present embodiment;
FIG. 3 is a diagram illustrating an example of a relationship between Δ1 and a normalized microbending loss;
FIG. 4 is a diagram illustrating an example of a relationship between Δ1 and an effective core area;
FIG. 5 is a diagram illustrating an example of a relationship between a glass diameter (cladding diameter) and a normalized microbending loss;
FIG. 6A is a diagram illustrating an example of a relationship among an effective core area, a glass diameter, and minimum Δ;
FIG. 6B is a diagram illustrating an example of a relationship among an effective core area, a glass diameter, and minimum primary thickness;
FIG. 7 is a diagram illustrating an example of a relationship between a normalized microbending loss and a transmission loss;
FIG. 8 is a diagram illustrating an example of a relationship between a glass diameter and a transmission loss; and
FIG. 9 is a diagram illustrating an example of a relationship between a relative refractive-index difference of a center core with respect to a silica level and a transmission loss.

### Description of Embodiments

Hereinafter, an embodiment of the present invention will be explained with reference to the drawings. It is noted that the embodiment explained below is not intended to limit the present invention. Moreover, in the respective drawings, identical reference symbols are assigned to identical or corresponding components as appropriate. Furthermore, in the present specification, cutoff wavelength or effective cutoff wavelength refers to cable cutoff wavelength defined by ITU-T G.650.1 of the International Telecommunication Union (ITU). Moreover, terms not specifically defined in the present specification are to follow the definition and measurement method in G.650.1 and G.650.2.

### Embodiment

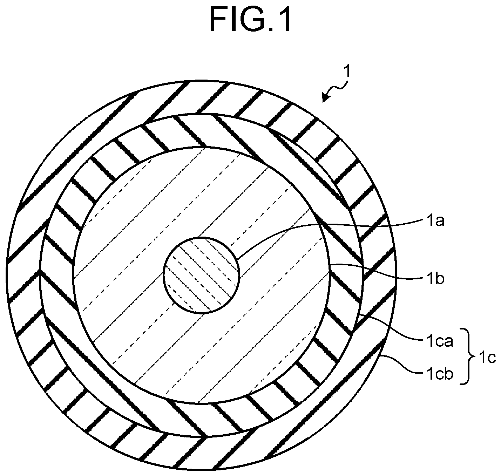

FIG. 1 is a schematic cross-section of an optical fiber according to the embodiment. An optical fiber 1 includes a core portion 1a that is made from silica-based glass, a cladding portion 1b that is made from silica-based glass having a lower refractive index than the maximum refractive index of the core portion 1a, and that surrounds an outer periphery of the core portion 1a, and a coating layer 1c that surrounds an outer periphery of the cladding portion 1b. The coating layer 1c includes a primary layer 1ca that surrounds the outer periphery of the cladding portion 1b, and a secondary layer 1cb that surrounds an outer periphery of the primary layer 1ca.

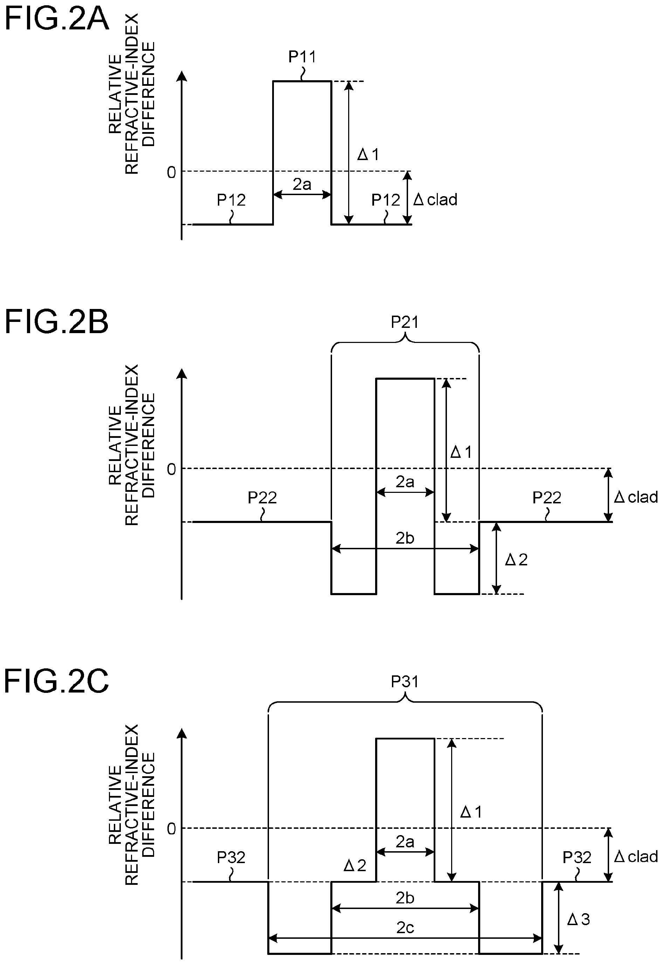

The optical fiber 1 has a refractive index profile, for example, as shown in FIGS. 2A to 2C. All of FIGS. 2A, 2B, and 2C show a refractive index profile in a radial direction from a center axis of the core portion 1a of the optical fiber 1. The refractive index profile is represented by a relative refractive-index difference with respect to pure silica glass. The pure silica glass is significantly pure silica glass that includes practically no dopants that change the refractive index and that has a refractive index of approximately 1.444 at a wavelength of 1550 nm.

FIG. 2A shows a step-index type refractive index profile. In FIG. 2A, a profile P11 indicates a refractive index profile of the core portion 1a, and a profile P12 indicates a refractive index profile of the cladding portion 1b. In the step-index type refractive index profile, a diameter (core diameter) of the core portion 1a is 2a, and a relative refractive-index difference of the maximum refractive index (maximum relative refractive-index difference) of the core portion 1a with respect to an average refractive index of the cladding portion 1b is Δ1. Moreover, a relative refractive-index difference of an average refractive index of the cladding portion 1b with respect to the refractive index of pure silica glass is ΔClad. In the case of FIG. 2A, a center core that is a portion at which the average refractive index is maximized in the core portion 1a corresponds to the entire core portion 1a.

FIG. 2B shows a so-called W-shaped type refractive index profile. In FIG. 2B, a profile P21 indicates a refractive index profile of the core portion 1a, and a profile P22 indicates a refractive index profile of the cladding portion 1b. In the W-shaped type refractive index profile, the core portion 1a is constituted of a center core having a diameter 2a, and a depressed layer that is formed to surround an outer periphery of the center core, that has a refractive index smaller than the refractive index of the cladding portion, and in which an inner diameter is 2a and an outer diameter is 2b. The center core is a portion in which the average refractive index is maximized in the core portion 1a. The maximum relative refractive-index difference of the center core with respect to an average refractive index of the cladding portion 1b is Δ1. The relative refractive-index difference of the average refractive index of the depressed layer with respect to the average refractive index of the cladding portion 1b is Δ2. Moreover, the refractive-index difference of the average refractive index of the cladding portion 1b with respect to the refractive index of pure silica glass is ΔClad.

FIG. 2C shows a so-called trench type refractive index profile. In FIG. 2C, a profile P31 indicates a refractive index profile of the core portion 1a, and a profile P32 indicates a refractive index profile of the cladding portion 1b. In the trench type refractive index profile, the core portion 1a is constituted of a center core having a diameter 2a, an intermediate layer that is formed to surround an outer periphery of the center core, that has a refractive index smaller than the maximum refractive index of the center core, and in which an inner diameter is 2a and an outer diameter is 2b, and a trench layer that is formed to surround an outer periphery of the intermediate layer, and that has a refractive index smaller than the refractive index of the cladding portion, and in which an inner diameter is 2b and an outer diameter is 2c. The center core is a portion in which the average refractive index is maximized in the core portion 1a. The maximum relative refractive-index difference of the center core with respect to the intermediate layer is Δ1. The relative refractive-index difference of the intermediate layer with respect to the cladding portion 1b is Δ2. Δ2 is normally set to 0% or its vicinity. The relative refractive-index difference of the trench layer with respect to the cladding portion 1b is Δ3. Moreover, the relative refractive-index difference of the average refractive index of the cladding portion 1b with respect to the refractive index of the pure silica glass is ΔClad.

The refractive index profile of the core portion 1a is not only a geometrically ideal shape of step index, but can also be a shape in which a shape of a top portion is not flat but has unevenness due to manufacturing characteristics, or in a sloping shape tapering downward from the top like a hem. In this case, the refractive index of a region that is substantially flat at the top portion of the refractive index profile within a range of the core diameter 2a of the core portion 1a based on the manufacturing design is to be an index to determine Δ1. Also in a case in which a substantially flat region seems to be separated into plural parts, or in a case in which the definition of substantially flat region is difficult because continuous changes occur, it has been confirmed that desired characteristics can be achieved as long as at least either part of the core portion excluding portions in which the refractive index changes abruptly toward an adjacent layer is within the range of Δ1 described below, and a difference of Δ between the maximum value and the minimum value is within a value ±30%, and there are no particular problems.

Furthermore, the average refractive index of the depressed layer, the intermediate layer, the trench layer, or the cladding portion 1b is an average value of the refractive index in the diameter direction of the refractive index profile.

Constituent materials of the optical fiber 1 will be explained. The center core of the core portion 1a is constituted of, for example, pure silica glass, or silica glass that includes at least one of Chlorine (Cl), fluorine (F), germanium (Ge), potassium (K), and sodium (Na). F reduces the refractive index of silica glass, and Ge, Cl, K, and Na are dopants that increase the refractive index of silica glass.

On the other hand, as for the cladding portion 1b, at least a part thereof is made from silica glass that includes, for example, fluorine or boron (B), which is a dopant to reduce the refractive index. On the other hand, the depressed layer and the trench layer are made from silica glass that includes more fluorine or boron, which is a dopant to reduce the refractive index, than the cladding portion. The intermediate layer is made from silica glass of the same components as the cladding portion 1b or components similar thereto. As the dopant to reduce the refractive index, it is more preferable to use fluorine in terms of manufacturability.

The primary layer 1ca and the secondary layer 1cb are made from resin. This resin is, for example, ultraviolet-curable resin. The ultraviolet-curable resin is a mixture of various kinds of resin materials, such as oligomer, diluent monomer, photopolymerization initiator, silane coupling agent, sensitizer, and lubricant, and an additive. As oligomer, conventionally known materials, such as polyether-based urethane acrylate, epoxy acrylate, polyester acrylate, and silicone acrylate can be used. As diluent monomer, conventionally known materials, such as monofunctional monomer and multifunctional monomer, can be used. Moreover, the additive is not limited to the ones described above, but a wide variety of conventionally known additives used for ultraviolet curable resin or the like can be used.

Because the cladding portion 1b includes a dopant to reduce the refractive index in this optical fiber 1, low transmission loss can be achieved, and for example, the transmission loss at a wavelength of 1550 nm is 0.18 dB/km or less. While the dopants described above are provided as examples of a dopant to be included in the cladding portion 1b or the core portion 1a, the dopant is not limited to these examples as long as the transmission loss at the wavelength of 1550 nm is 0.18 dB/km or less. Moreover, in this optical fiber 1, a cable cutoff wavelength is 1530 nm or smaller, and it enables light of a wavelength in a 1550 nm band (for example, 1530 nm to 1565 nm) or longer to be transmitted in a single mode and, therefore, it is practical.

Furthermore, in this optical fiber 1, the outer diameter (cladding diameter) of the cladding portion 1b is equal to or larger than 70 µm and equal to or smaller than 120 µm, and is smaller than 125 µm, which is a typical cladding diameter. This enables to exponentially reduce the volume of the cladding portion 1b that includes an expensive dopant, such as fluorine and boron, to reduce the refractive index, and leads to significant reduction of cost.

The inventors investigated the reduction rate of volume of a cladding portion relative to an optical fiber having a cladding diameter of 125 µm when the cladding portion includes a dopant to reduce the refractive index, and the cladding diameter of three kinds of optical fibers having effective core areas different from one another was changed. The effective core areas (Aeff) were set to 80 µm², 110 µm², and 125 µm², which are all typical values. Moreover, the cladding diameter was changed in a 10µm interval from 70 µm to 120 µm. The results are presented in Table 1. As shown in Table 1, it was confirmed that when the cladding diameter was 120 µm, the volume of the cladding portion 1b could be reduced by approximately 8%, and when 80 µm, approximately 60% could be reduced. Accordingly, it was confirmed that reduction of diameter of the cladding portion 1b is a highly effective means for cost reduction.

**Table 1**

| Cladding diameter | 70 µm | 80 µm | 90 µm | 100 µm | 110 µm | 120 µm |
|---|---|---|---|---|---|---|
| Aeff=80 µm² | 69.0% | 59.3% | 48.4% | 36.2% | 22.7% | 7.9% |
| Aeff=110µm² | 69.3% | 59.6% | 48.6% | 36.4% | 22.8% | 7.9% |
| Aeff=125 µm² | 69.5% | 59.7% | 48.7% | 36.4% | 22.8% | 7.9% |

### MICROBENDING LOSS

A concern when the cladding diameter of the cladding portion 1b is reduced in the optical fiber 1 is increase of the microbending loss. Therefore, the inventors have conducted earnest investigation on the microbending loss.

Generally, in an optical fiber, when a glass diameter, that is, the cladding diameter, is reduced, the microbending loss (also called side pressure loss) increases. Normally, the transmission loss of an optical fiber increases in a form of optical fiber cable. An amount of increase of the transmission loss at this time is closely related to microbending loss, and when the microbending loss is large, the amount of increase is also large.

Herein, referring to single-mode optical fiber having characteristics that comply with the standard defined by ITU-T G.652 as standard optical fiber, it is denoted as standard SMF. Such a standard SMF normally has a coating layer constituted of a resin having a thickness of approximately 62.5 µm on an outer periphery of the cladding portion. The coating layer is constituted of, for example, in the case of two layer structure, a primary layer that has a thickness of approximately 37.5 µm and a secondary layer that surrounds the outer periphery of the primary layer, and that has a thickness of approximately 25 µm. Therefore, the outer diameter of the coating layer is approximately 250 µm.

In the optical fiber 1, if the microbending loss at a wavelength of 1550 nm is 20 times lower than the microbending loss of standard SMF, it can be considered as the microbending loss of a practical level. If it is assumed that a value standardized by the microbending loss in the standard SMF is defined as normalized microbending loss, the normalized microbending loss of the optical fiber 1 according to the present embodiment is preferable to be 20 or less, and is more preferable to be 10 or less. A value 20 of a case in which the normalized microbending loss is to be 20 or less is a value that can suppress the microbending loss to a practical level even after it is manufactured into a cable.

As for the microbending loss, a value that is measured by using a sandpaper method similar to the fixed diameter drum method defined in JIS C6823:2010 can be adopted. The sandpaper method is to define a difference between a transmission loss in a state A in which an optical fiber having a length of 500 m is wound in a single layer without overlap on a stationary drum wrapped with, for example, a #1000 grit sandpaper with a tension of 100 gf and a transmission loss of an optical fiber in a state B in which it is wound on the same bobbin as that in the state A but without the sandpaper wrapped with the same tension and the same length as the state A, as a value of the microbending loss. The transmission loss of the optical fiber in the state B does not include a microbending loss, and can be regarded as an inherent transmission of the optical fiber itself. Moreover, in this measurement method, because a transmission loss is measured at, for example, a wavelength of 1550 nm, a microbending loss is also a value at a wavelength of 1550 nm. Hereinafter, unless otherwise specified, a microbending loss is a value at a wavelength of 1550 nm.

For the microbending loss, a value that is measured by using other methods, such as a wire mesh method, can also be adopted.

Moreover, generally, in an optical fiber, a leakage loss in which light propagating through the core portion leaks out from the cladding portion can occur when the cladding diameter is reduced. As a value of the leakage loss, it is preferable to be a substantially ignorable level, such as 0.001 dB/km at a wavelength of 1625 nm.

Furthermore, in an optical fiber that includes a dopant to reduce the refractive index in the cladding portion 1b as the optical fiber 1, there is a possibility that stress distributions differ between the core portion and the cladding portion, compared with an optical fiber in which the cladding is made from mainly pure silica glass. Therefore, to achieve low transmission loss, it is necessary to suppress increase of the transmission loss based on such a difference in stress distributions. The inventors conducted a systematic and comprehensive investigation based on simulation calculations and experiments and confirmed that such an increase of the transmission loss can be achieved by adjustment of structural parameters in the step-index type, the W-shaped type, and the trench type, which are the refractive index profiles including the core portion 1a.

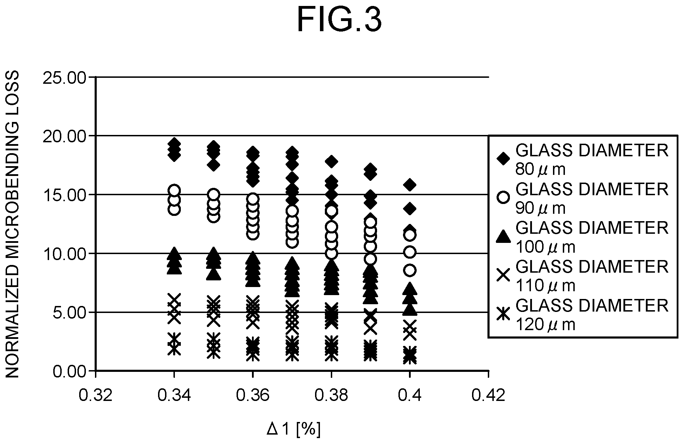

In the following, it will be specifically explained. FIG. 3 is a diagram illustrating an example of a relationship between Δ1 at a wavelength of 1550 nm and a normalized microbending loss in a configuration similar to the optical fiber 1. FIG. 3 shows results based on simulation calculations, and results considering various values of the glass diameter (cladding diameter). Moreover, FIG. 3 shows a case in which Aeff of the optical fiber is fixed to 80 µm², a thickness of the primary layer (primary thickness) of the coating layer is fixed to 25 µm, and a thickness of the secondary layer (secondary thickness) is fixed to 17.5 µm. Moreover, the reason why plural data points are present for the same glass diameter and the same Δ1 is because as the structural parameters, calculations were performed while changing Δ2 and b/a in the case of the W-shaped type, and Δ3, b/a, and c/a in the case of the trench type in a certain range. Specifically, in the case of the W-shaped type, Δ2 was changed within a range of -0.3% to -0.08%, and b/a within a range of 1.8 to 4. Furthermore, in the case of the trench type, Δ3 was changed within a range of -0.3% to -0.08%, b/a within a range of 1.8 to 4.5, and c/a within a range of 3.0 to 5.0.

As shown in FIG. 3, it has been confirmed that there is a tendency that as the glass diameter increases, or as Δ1 increases, the normalized microbending loss decreases on average, and in contrast, as the glass diameter decreases, or as Δ1 decreases, the normalized microbending loss increases on average.

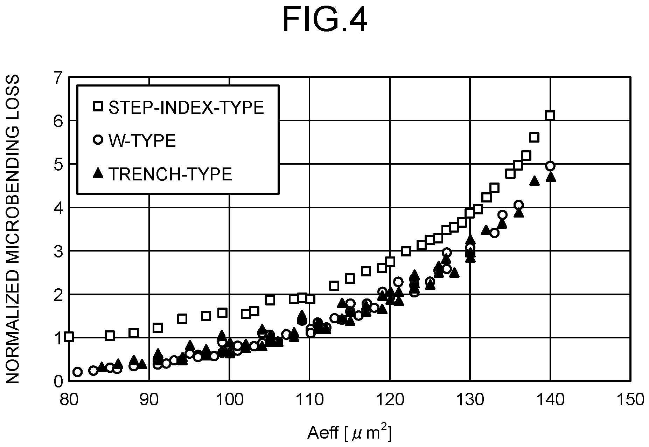

Next, FIG. 4 is a diagram illustrating an example of a relationship between Aeff and a normalized microbending loss at a wavelength of 1550 nm in a configuration similar to the optical fiber 1. FIG. 4 shows results based on simulation calculations and confirmed to be consistent with experimental results, and are results considering the refractive index profiles in the step-index type, the W-shaped type, and the trench type. Furthermore, FIG. 4 shows a case in which the glass diameter is fixed to 120 µm, the primary thickness of the coating layer is fixed to 25 µm, the secondary thickness is fixed to 17.5 µm, and a cable cutoff wavelength is fixed to 1530 nm or smaller.

As shown in FIG. 4, it has been confirmed that the normalized microbending loss has an exponential correlation with respect to Aeff, and the correlation is relatively high. Moreover, it has also been confirmed that there is a tendency that with the same Aeff, the W-shape type and the trench type have a less normalized microbending loss than the step-index type. For example, in the W-shape type and the trench type, even when Aeff was set to 140 µm², the normalized microbending loss was 5 or less.

Subsequently, the microbending loss is considered to be affected not only by the glass diameter, but also by the primary thickness and the secondary thickness of the coating layer, and is considered to be significantly affected particularly by the primary thickness. For this, the inventors have conducted investigations by simulation calculations and experiments.

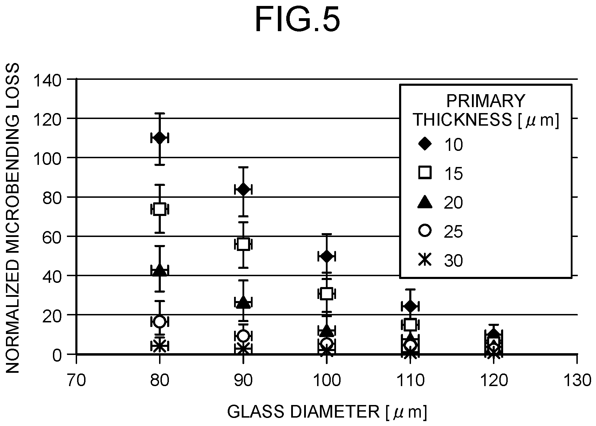

FIG. 5 is a diagram illustrating an example of a relationship between a glass diameter and a normalized microbending loss at a wavelength of 1550 nm in a configuration similar to the optical fiber 1. FIG. 5 shows results based on simulation calculations and experiments, and results considering values of 10 µm to 30 µm of the primary thickness. It shows a case in which the refractive index profiles are the step-index type or the W-shape type, and Aeff is fixed to 80 µm², and the secondary thickness is fixed to 17.5 µm.

As shown in FIG. 5, it was found that the microbending loss is affected not only by the glass diameter, but also by a thickness of the primary layer, and that, for example, as the thickness of the primary layer decreases, the microbending loss increases.

Next, systematic investigations was conducted while changing Aeff, and changing a refractive index profile and the structural parameters (Δ1, Δ2, Δ3, 2a, b/a, c/a, and the like) of the refractive index profile, the glass diameter, and the primary thickness, with Aeff thus changed.

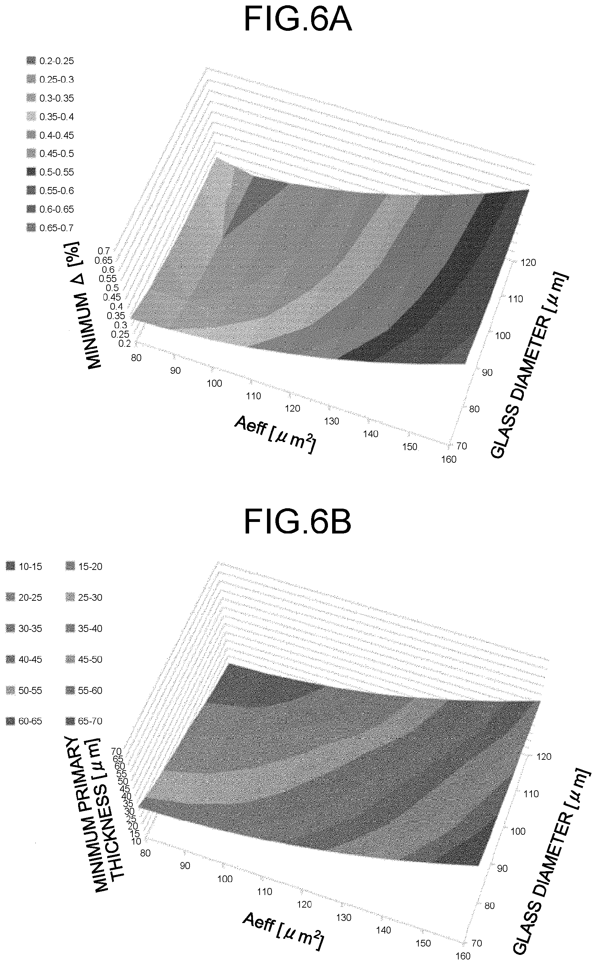

FIG. 6A is a diagram illustrating an example of a relationship among Aeff, the glass diameter, and the minimum Δ. FIG. 6B is a diagram illustrating an example of a relationship among Aeff, the glass diameter, and the minimum primary thickness. The minimum Δ is the minimum value of Δ1 that can satisfy both a low leakage loss of 0.001 dB/km or less (hereinafter, it can be denoted also as low-leakage-loss threshold value) and a normalized microbending loss of 20 or less at a wavelength of 1625 nm at the same time. Moreover, the minimum primary thickness is the minimum value of the primary thickness that can satisfy both the low-leakage-loss threshold value and the normalized microbending loss of 20 or less at the same time when Aeff and the glass diameter are changed.

From FIG. 6A, it was found that there is no solution that satisfy all the characteristics unless Δ1 is equal to or larger than 0.2%. All the characteristics signify the low-leakage-loss threshold value, the normalized microbending loss of 20 or less, and the cable cutoff wavelength of 1530 nm or smaller.

Furthermore, from FIG. 6A, it was found that because the cable cutoff wavelength exceeds 1530 nm when Δ1 is 0.5% or larger, there is no solution that satisfy all the characteristics unless Aeff is equal to or smaller than 150 µm².

Moreover, from FIG. 6B, it was found that there is no solution that satisfy all the characteristics unless the primary thickness is equal to or larger than 10 µm. Furthermore, it was found that to make the fiber diameter preferable for high density integration of optical fibers in an optical fiber cable by making the fiber diameter, which is the outer diameter of the coating layer, 210 µm or smaller, which is smaller than a typical diameter of 250 µm, it is difficult to achieve it unless the primary thickness is equal to or smaller than 50 µm.

The inventors have found, from the systematic investigations as described above, that the low-leakage-loss threshold value, the microbending loss of 20 or less, and the cable cutoff wavelength of 1530 nm or smaller can be satisfied at the same time while making the fiber diameter 210 µm or smaller, within an optimal parameter range of the glass diameter being equal to or larger than 70 µm and equal to or smaller than 120 µm, the primary thickness being equal to or larger than 10 µm and equal to or smaller than 50 µm, Δ1 being equal to or higher than 0.20% and equal to or lower than 0.50%, and Aeff being equal to or smaller than 150 µm².

As described above, it is preferable that the glass diameter is small because reduced cost of the optical fiber is achieved, and because reduced cost by reduced resin materials and high density integration of optical fibers in an optical fiber cable are achieved with a reduced fiber diameter.

As for Aeff, it is not particularly problematic to be small from the viewpoint of the leakage loss or the microbending loss. However, when considering optical nonlinearity, or connectivity with other optical fibers, such as a typical optical fiber having Aeff of about 80 µm², Aeff is preferable to be equal to or larger than 50 µm², and, for example, be equal to or larger than 70 µm².

Next, the transmission loss will be further explained. As for the transmission loss, in addition to combinations of various parameters as described above, various parameters in a manufacturing process (process parameters), such as a residual stress distribution occurring at the time of drawing of an optical fiber, affect. Therefore, the inventors made many prototypes of optical fiber under conditions that meet the optimal parameter range described above, and investigated the transmission loss characteristics thereof. In manufacturing of the prototypes, process parameters were optimized under respective conditions.

As for the coating layer, an ultraviolet-curable resin material having an elastic modulus of equal to or higher than 0.2 MPa to equal to or lower than 3.0 MPa was used for the primary layer, and an ultraviolet-curable resin material having an elastic modulus of equal to or higher than 5.0 MPa to equal to or lower than 2000 MPa was used for the secondary layer. These ultraviolet-curable resin materials are typical materials used for a coating layer of a standard SMF.

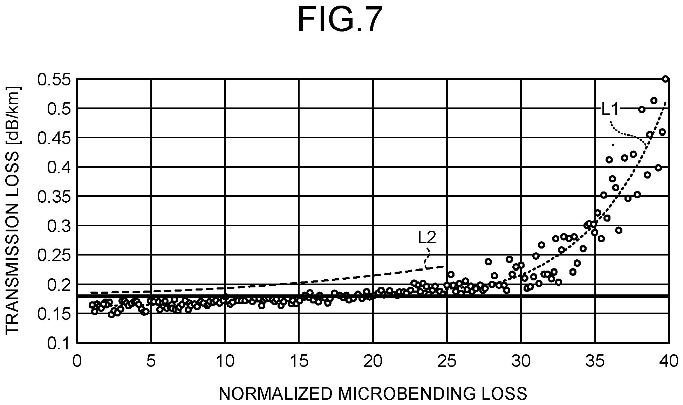

FIG. 7 is a diagram illustrating an example of a relationship between the normalized microbending loss and the transmission loss summarized based on results of the prototypes. The transmission loss is a value at a wavelength of 1550 nm. Moreover, a solid line indicates a level of 0.18 dB/km.

As shown in FIG. 7, it was found that when the normalized microbending loss exceeds 20, the transmission loss of 0.18 dB/km cannot be obtained no matter how the refractive index of the cladding portion is reduced and the material and the process are optimized. Although these relationships show the same tendency as an optical fiber of a standard diameter, the optimal range is specific to the optical fiber with a reduced diameter, and it is an important insight.

Moreover, although it fluctuates depending on a material to be doped in the core portion or the cladding portion or on a refractive index profile even in optical fibers having the same value of microbending loss, it was experimentally confirmed that a limit in achieving the desired characteristics by the optimization is a range in which the normalized microbending loss is 20 or less.

A broken line L1 is a curve obtained by approximating data points by a quintic function using the least squares method. The broken line L1 is represented by y=2.8341×10^{-a}x^{s}-1.8284×10⁻⁶x⁴+4.0977×10⁻⁵x³-3.4584×10⁻⁴x²+1.777 9×10⁻³x+0.1607. y is transmission loss, and x is normalized microbending loss.

A value when x=0 in the quintic function above, that is, 0.1607 dB/km is thought to be a transmission loss when there is no influence of microbending loss, that is, in a state in which no side pressure is applied at all. Therefore, considering 0.18-0.1607=0.0193, it is preferable that an optical fiber be configured by selecting a refractive index profile or a cross-sectional structure with which an increase of transmission loss caused by the microbending loss is 0.0193 dB/km or less on average when it is in an actual operating condition with side pressure applied, such as in a state in which an optical fiber is wound around a bobbin or is turned into a cable form, to achieve the transmission loss of 0.18 dB/km or less.

A broken line L2 shows an example of a relationship between the normalized microbending loss and the transmission loss of an optical fiber in which the cladding portion does not include a dopant to reduce the refractive index, and the cladding portion is made thin. The broken lines L1 and L2 are both quintic function, and the tendency of those are similar but the manner of change is different from each other, and it is found that an optimal range or an obtained value of transmission loss are different.

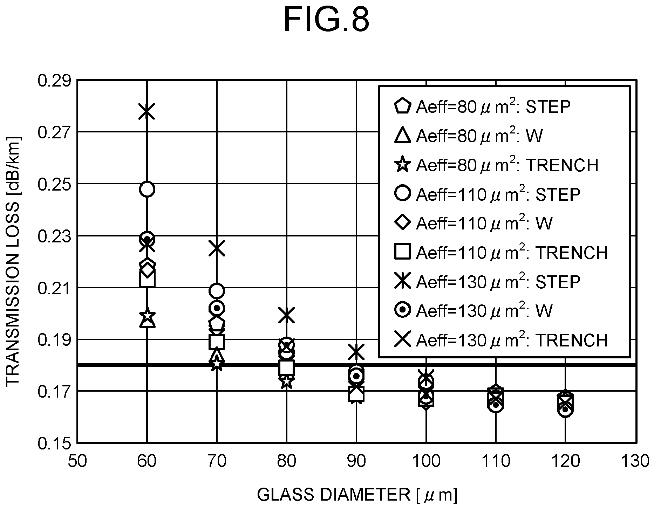

FIG. 8 is a diagram illustrating an example of a relationship between the glass diameter and the transmission loss summarized based on results of the prototypes. The results provided in FIG. 8 are results obtained for a case in which chlorine is dope in the core portion and fluorine is dope in the cladding portion. Moreover, the transmission loss shows the minimum value out of plural optical fibers having the same Aeff and refractive index profile. Furthermore, a solid line represents a level of 0.18 dB/km.

As shown in FIG. 8, it was confirmed that the glass diameter is preferable to be equal to or larger than 70 µm or larger in terms of reducing the transmission loss. To the contrary, it was confirmed that when the glass diameter is smaller than 70 µm, suppressing the transmission loss to 0.18 dB/km or less was difficult even if other parameters were optimized. This can be considered to be originated from the influence of the microbending loss in the transmission loss being significant because it is difficult to suppress the normalized microbending loss to 20 or less when the glass diameter is smaller than 70 µm. The same tendency was observed also when dopants of the core portion and the cladding portion are different from the ones described above.

Moreover, the inventors have found, based on numerous experiments, that a relative refractive-index difference of an average refractive index of a center core in which the average refractive index is maximized in the core portion with respect to the refractive index of pure silica glass significantly affects the transmission loss in an optical fiber with the cladding portion including a dopant to reduce the refractive index.

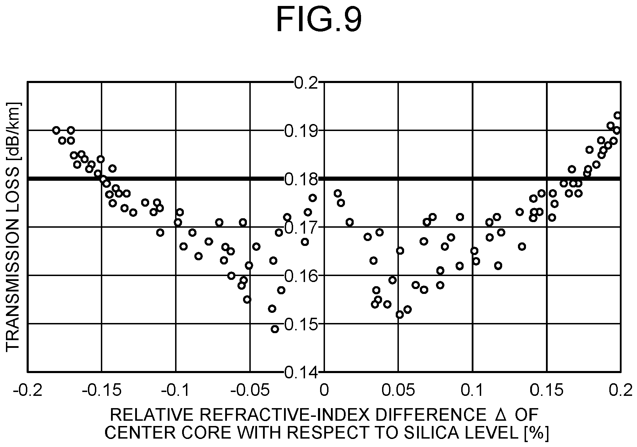

FIG. 9 is a diagram illustrating an example of a relationship between Δ1', which is a relative refractive-index difference of the center core with respect to a silica level and a transmission loss at a wavelength of 1550 nm. The silica level signifies a level of the refractive index of pure silica glass. FIG. 9 shows a relationship specific to a thin optical fiber having a glass diameter of 120 µm or smaller that includes fluorine in the cladding portion as a dopant. In the example shown in the drawing, it is found that the transmission loss can be suppressed to 0.18 dB/km or less when Δ1' is equal to or higher than -0.15% and equal to or lower than 0.17%. It is noted that Δ1 without "'" is a relative refractive-index difference with respect to the cladding portion or the intermediate layer. It is similarly applied to Δ2' and Δ3' described later.

Furthermore, as can be seen from FIG. 9, it is more preferable that Δ1' be equal to or higher than -0.10% and equal to or lower than -0.01%, or be equal to or higher than 0.02% and equal to or lower than 0.13% because the ultra-low transmission loss of 0.018 dB/km or less can be more stably achieved and, further, the ultra-low transmission loss of 0.175 dB/km or less can be achieved.

As described, Δ1' (absolute value of a relative refractive-index difference of a center core) with respect to the silica level and the transmission loss of a thin optical fiber have a close relationship, and there is an optical range specific to having a thin diameter. Therefore, manufacturing an optical fiber in the optical range of the present invention is significantly important to reduce the transmission loss of a thin optical fiber that includes a dopant to reduce the refractive index in the cladding portion.

The optical fiber 1 according to the present embodiment can be manufactured easily by fabricating an optical fiber preform by a publicly known method using the vapor axial deposition (VAD) method, the outside vapor deposition (OVD) method, the modified chemical vapor deposition (MCVD) method, the plasma CVD method, and the like, and by drawing fibers from this optical fiber preform into the optical fiber 1.

For example, dopants, such as germanium, fluorine, potassium, and sodium, can be added to an optical fiber preform by using a gas including the dopant while synthesizing soot. Moreover, potassium and sodium may be doped in glass by the gas-phase method, the immersion method, or the like, utilizing their speedy diffusion, not while synthesizing soot. Furthermore, chlorine can be added to an optical fiber preform by causing a chlorine gas that is used in a dehydration process to remain. Moreover, fluorine can be added to an optical fiber preform by flowing a fluorine gas in a vitrification structure.

### Example

As an example of the present invention, optical fibers of sample Nos. 1 to 22 were drawn from an optical fiber preform fabricated by using the VAD method, and their optical characteristics were measured. In the optical fibers, a coating layer of an ultraviolet-curable resin constituted of the primary layer and the secondary layer was formed. The Young's modulus of the primary layer was 0.4 MPa, and the Young's modulus of the secondary layer was 1000 MPa.

Structures and optical characteristics of optical fibers of sample Nos. 1 to 22 are shown in Tables 2A and 2B. In Tables 2A and 2B, "Δ1'", "Δ2'", and "Δ3'" are a relative refractive-index difference of the center core with respect to the silica level, a relative refractive-index difference of the depressed layer or the intermediate layer with respect to the silica level, and a relative refractive-index difference of the trench layer with respect to the silica level, respectively. Moreover, "primary diameter" is an outer diameter of the primary layer, and "fiber diameter" is an outer diameter of the secondary layer. Furthermore, as for the dopants, for example, "Cl₂+K+Na/F" signifies that chlorine, potassium, and sodium are doped in the center core, and fluorine is doped in the cladding portion.

In either one of sample Nos. 1 to 22, the cable cutoff wavelength was 1530 nm or smaller. Therefore, either one of sample Nos. 1 to 22 was to function as a single mode optical fiber at a wavelength of 1550 nm.

Moreover, in either one of sample Nos. 1 to 22, the cladding diameter was equal to or larger than 70 µm and equal to or smaller than 120 µm, and the transmission loss at the wavelength of 1550 nm was 0.18 dB/km or less.

Furthermore, in either one of sample Nos. 1 to 22, Aeff at the wavelength of 1550 nm was equal to or smaller than 150 µm², and equal to or larger than 50 µm².

Moreover, in either one of sample Nos. 1 to 22, the fiber diameter was 210 µm or smaller.

Furthermore, in either one of sample Nos. 1 to 22, the thickness of the primary layer was 10 µm or larger. For example, in even sample No. 22 having the thinnest primary layer, it was 17.5 µm.

Moreover, in either one of sample Nos. 1 to 22, the normalized microbending loss at the wavelength of 1550 nm was 20 or less.

Furthermore, in either one of sample Nos. 1 to 22, Δ1 was equal to or higher than 0.20% and equal to or lower than 0.50%, and Δ1' was equal to or higher than -0.15% and equal to or lower than 0.17%.

Moreover, in either one of sample Nos. 1 to 22, ΔClad was equal to or higher than -0.50% and was 0.13%.

Specifically, for sample No. 1, when the refractive index was the step-index type, Δ1 was 0.42%, ΔClad was -0.33%, 2a was 9 µm, the glass diameter was 118 µm, the primary diameter was 169 µm, the fiber diameter was 207 µm, the dopant of the center core was Cl₂, and the dopant of the cladding portion was F, preferable values were obtained as the transmission loss of 0.167 dB/km, the normalized microbending loss of 1.6, and Aeff of 75 µm², and it was a particularly preferable combination of core dopants from the viewpoint of manufacturability and low loss.

Moreover, for sample No. 3, when the refractive index was the step-index type, Δ1 was 0.39%, ΔClad was -0.39%, 2a was 10 µm, the glass diameter was 112 µm, the primary diameter was 163 µm, the fiber diameter was 197 µm, the dopant of the center core was K, and the dopant of the cladding portion was F, preferable values were obtained as the transmission loss of 0.156 dB/km, the normalized microbending loss of 1.9, and Aeff of 86 µm², and it was a particularly preferable combination of core dopants from the viewpoint of manufacturability and low loss, and was a particularly preferable combination of profile structures from the viewpoint of manufacturability and preferable optical characteristics.

Furthermore, for sample No. 4, when the refractive index was the W-shape type, Δ1 was 0.36%, Δ2 was -0.4%, ΔClad was -0.23%, b/a was 2, 2a was 9 µm, the glass diameter was 110 µm, the primary diameter was 155 µm, the fiber diameter was 193 µm, the dopant of the center core was Cl₂+K, and the dopant of the cladding portion was F, preferable values were obtained as the transmission loss of 0.153 dB/km, the normalized microbending loss of 1.1, and Aeff of 58 µm², and it was a particularly preferable combination of core dopants from the viewpoint of manufacturability and low loss.

Moreover, for sample No. 7, when the refractive index was the W-shape type, Δ1 was 0.27%, Δ2 was -0.11%, ΔClad was -0.14%, b/a was 2.9, 2a was 12.6 µm, the glass diameter was 102 µm, the primary diameter was 146 µm, the fiber diameter was 182 µm, the dopant of the center core was Cl₂+K+Na, and the dopant of the cladding portion was F, preferable values were obtained as the transmission loss of 0.158 dB/km, the normalized microbending loss of 3.5, and Aeff of 111 µm², and it was a particularly preferable combination of profile structures from the viewpoint of manufacturability and optical characteristics.

Furthermore, for sample No. 9, when the refractive index was the W-shape type, Δ1 was 0.25%, Δ2 was -0.17%, ΔClad was -0.3%, b/a was 2.8, 2a was 14.1 µm, the glass diameter was 97 µm, the primary diameter was 140 µm, the fiber diameter was 174 µm, the dopant of the center core was F+Na, and the dopant of the cladding portion was F, preferable values were obtained as the transmission loss of 0.18 dB/km, the normalized microbending loss of 8.9, and Aeff of 127 µm², and it was a particularly preferable combination of profile structures from the viewpoint of manufacturability and optical characteristics.

**Table 2A**

| Sample No. | Profile | Δ1' | Δ2' | Δ3' | ΔClad | Δ1 | Δ2 | Δ3 | b/a | c/a | 2a | Glass diameter | Primary diameter | Fiber diameter | Dopant (center core/ cladding) | Transmission loss | Normalized microbending loss | Aeff |
|---|---|---|---|---|---|---|---|---|---|---|---|---|---|---|---|---|---|---|
| | | | | | | | | | | | | | | | | 1550 nm | 1550 nm | 1550 nm |
| Unit | | [%] | [%] | [%] | [%] | [%] | [%] | [%] | | | [µm] | [µm] | [µm] | [µm] | | [dB/km] | | [µm²] |
| No. 1 | Step | 0.09 | | | -0.33 | 0.42 | | | | | 9 | 118 | 169 | 207 | Cl₂/F | 0.167 | 1.6 | 75 |
| No. 2 | Step | 0.07 | | | -0.33 | 0.4 | | | | | 10 | 116 | 166 | 201 | Cl₂+F/F | 0.164 | 1.7 | 85 |
| No. 3 | Step | 0.03 | | | -0.36 | 0.39 | | | | | 10 | 112 | 163 | 197 | K/F | 0.156 | 1.9 | 86 |
| No. 4 | W | 0.13 | -0.63 | | -0.23 | 0.36 | -0.4 | | 2 | | 9 | 110 | 155 | 193 | Cl₂+K/F | 0.153 | 1.1 | 58 |
| No. 5 | W | 0.04 | -0.48 | | -0.25 | 0.29 | -0.23 | | 3.1 | | 11.4 | 108 | 152 | 189 | Na/F | 0.168 | 2.2 | 90 |
| No. 6 | W | 0.12 | -0.3 | | -0.13 | 0.25 | -0.17 | | 4 | | 12 | 106 | 150 | 185 | Cl₂+Na/F | 0.165 | 2.8 | 104 |
| No. 7 | W | 0.13 | -0.25 | | -0.14 | 0.27 | -0.11 | | 2.9 | | 12.6 | 102 | 146 | 182 | Cl₂+K+Na/F | 0.158 | 3.5 | 111 |
| No. 8 | W | -0.04 | -0.38 | | -0.24 | 0.2 | -0.14 | | 3.2 | | 13.3 | 100 | 143 | 177 | F+K/F | 0.155 | 5.3 | 116 |
| No. 9 | W | -0.05 | -0.47 | | -0.3 | 0.25 | -0.17 | | 2.8 | | 14.1 | 97 | 140 | 174 | F+Na/F | 0.168 | 8.9 | 127 |
| No. 10 | W | 0.07 | -0.29 | | -0.2 | 0.27 | -0.09 | | 2.5 | | 14.3 | 94 | 137 | 170 | Cl₂+F+K/F | 0.164 | 13.9 | 135 |
| No.11 | W | -0.1 | -0.4 | | -0.35 | 0.25 | -0.05 | | 1.9 | | 14.5 | 91 | 133 | 168 | F/F | 0.174 | 19.5 | 148 |

**Table 2B**

| Sample No. | Profile | Δ1' | Δ2' | Δ3' | ΔClad | Δ1 | Δ2 | Δ3 | b/a | c/a | 2a | Glass diameter | Primary diameter | Fiber diameter | Dopant (center core/ cladding) | Transmission loss | Normalized microbending loss | Aeff |
|---|---|---|---|---|---|---|---|---|---|---|---|---|---|---|---|---|---|---|
| | | | | | | | | | | | | | | | | 1550 nm | 1550 nm | 1550 nm |
| Unit | | [%] | [%] | [%] | [%] | [%] | [%] | [%] | | | [µm] | [µm] | [µm] | [µm] | | [dB/km] | | [µm²] |
| No. 12 | Trench | -0.13 | -0.49 | -0.69 | -0.49 | 0.36 | 0 | -0.2 | 2.2 | 4 | 8.4 | 88 | 130 | 166 | F/F | 0.173 | 4.1 | 76 |
| No. 13 | Trench | -0.15 | -0.5 | -0.7 | -0.5 | 0.35 | 0 | -0.2 | 2.2 | 4 | 8.5 | 85 | 128 | 165 | F/F | 0.178 | 6.5 | 78 |
| No. 14 | Trench | 0.15 | -0.22 | -0.42 | -0.22 | 0.37 | 0 | -0.2 | 2.2 | 5 | 7.9 | 82 | 124 | 161 | Cl₂/F | 0.173 | 7.2 | 75 |
| No. 15 | Trench | 0.16 | -0.21 | -0.41 | -0.21 | 0.37 | 0 | -0.2 | 1.9 | 3.9 | 8.3 | 80 | 120 | 158 | Cl₂+Ge/F | 0.176 | 9 | 75 |
| No. 16 | Trench | 0.17 | -0.2 | -0.4 | -0.2 | 0.37 | 0 | -0.2 | 2.1 | 4.3 | 8.1 | 78 | 118 | 155 | Cl₂+Ge/F | 0.178 | 10.7 | 73 |
| No. 17 | Trench | 0.08 | -0.29 | -0.51 | -0.29 | 0.37 | 0 | -0.22 | 3 | 5 | 7.8 | 75 | 115 | 152 | Cl₂+F+K/F | 0.179 | 14.6 | 74 |
| No. 18 | Trench | 0.13 | -0.23 | -0.63 | -0.23 | 0.36 | 0 | -0.4 | 4.5 | 6 | 9 | 72 | 112 | 149 | Cl₂+K/F | 0.175 | 16.6 | 83 |
| No. 19 | Trench | 0.12 | -0.24 | -0.79 | -0.24 | 0.36 | 0 | -0.55 | 3 | 4.1 | 8.8 | 70 | 108 | 146 | Cl₂/F | 0.179 | 19.8 | 81 |
| No. 20 | Trench | -0.05 | -0.32 | -0.49 | -0.32 | 0.27 | 0 | -0.17 | 2 | 3.9 | 11 | 80 | 135 | 165 | F/F | 0.164 | 7.1 | 112 |
| No. 21 | Trench | -0.07 | -0.33 | -0.44 | -0.33 | 0.26 | 0 | -0.11 | 2.5 | 3.5 | 12 | 90 | 135 | 165 | F/B | 0.174 | 7.4 | 121 |
| No. 22 | Trench | 0.11 | -0.14 | -0.31 | -0.14 | 0.25 | 0 | -0.17 | 2 | 3 | 12.5 | 100 | 135 | 165 | Cl₂/F | 0.174 | 7.9 | 128 |

Note that the present invention is not limited to the above embodiment. The present invention also includes structures that are formed by appropriately combining the respective components described above. Moreover, more effects and modifications can be easily derived by those skilled in the art. Therefore, broader embodiments of the present invention are not limited to the embodiment described above, and allow various modifications.

### Industrial Applicability

The present invention can be used for optical fibers.

### Reference Signs List

- 1: OPTICAL FIBER
- 1a: CORE PORTION
- 1b: CLADDING PORTION
- 1c: COATING LAYER
- 1ca: PRIMARY LAYER
- 1cb: SECONDARY LAYER
- L1, L2: BROKEN LINE
- P11, P12, P21, P22, P31, P32: PROFILE

## Claims

1. An optical fiber comprising:
a core portion; and
a cladding portion configured to surround an outer periphery of the core portion, the cladding portion having a refractive index lower than a maximum refractive index of the core portion, and containing a dopant to reduce the refractive index, wherein
the core portion includes a center core in which an average refractive index is maximized in the optical fiber,
a relative refractive-index difference of the average refractive index of the center core with respect to an average refractive index of the cladding portion is equal to or higher than 0.20% and equal to or lower than 0.50%,
an outer diameter of the cladding portion is equal to or larger than 70 µm and equal to or smaller than 120 µm,
a cable cutoff wavelength is equal to or smaller than 1530 nm, and
a transmission loss at a wavelength of 1550 nm is equal to or less than 0.18 dB/km.

2. The optical fiber according to claim 1, wherein an effective core area at the wavelength of 1550 nm is equal to or smaller than 150 µm².

3. The optical fiber according to claim 2, wherein the effective core area at the wavelength of 1550 nm is equal to or larger than 50 µm².

4. The optical fiber according to any one of claims 1 to 3, wherein at least a part of the cladding portion is made from silica glass including any one of fluorine and boron.

5. The optical fiber according to any one of claims 1 to 4, wherein the core portion is made of any one of pure silica glass and silica glass that includes one of chlorine, fluorine, germanium, potassium, and sodium, and includes a center core in which an average refractive index is maximized in the optical fiber.

6. The optical fiber according to any one of claims 1 to 5, further comprising
a coating layer configured to surround an outer periphery of the cladding portion, wherein
an outer diameter of the coating layer is equal to or smaller than 210 µm.

7. The optical fiber according to claim 6, wherein
the coating layer includes
a primary layer configured to surround the outer periphery of the cladding portion, and
a secondary layer configured to surround an outer periphery of the primary layer, and
a thickness of the primary layer is equal to or larger than 10 µm.

8. The optical fiber according to any one of claims 1 to 7, wherein a normalized microbending loss at the wavelength of 1550 nm is 20 or less, the normalized microbending loss normalized by a microbending loss at the wavelength of 1550 nm of a standard optical fiber that has characteristics compliant with standards defined in ITU-T G.652, and has a coating layer having a thickness of 62.5 µm on an outer periphery of a cladding portion having an outer diameter of 125 µm.

9. The optical fiber according to claim 8, wherein the microbending loss is a value that is measured by the sandpaper method.

10. The optical fiber according to any one of claims 1 to 9, wherein an increase of the transmission loss due to the microbending loss is equal to or less than 0.0193 dB/km.

11. The optical fiber according to any one of claims 1 to 10, wherein a refractive index profile is a step-index type.

12. The optical fiber according to any one of claims 1 to 10, wherein a refractive index profile is a W-shape type.

13. The optical fiber according to any one of claims 1 to 10, wherein a refractive index profile is a trench type.

14. The optical fiber according to any one of claims 1 to 13, wherein a relative refractive-index difference of the average refractive index of the center core with respect to a refractive index of pure silica glass is equal to or higher than -0.15% and equal to or lower than 0.17%.

15. The optical fiber according to any one of claims 1 to 13, wherein a relative refractive-index difference of the average refractive index of the center core with respect to a refractive index of pure silica glass is equal to or higher than -0.10% and equal to or lower than -0.01%.

16. The optical fiber according to any one of claims 1 to 13, wherein a relative refractive-index difference of the average refractive index of the center core with respect to a refractive index of pure silica glass is equal to or higher than 0.02% and equal to or lower than 0.13%.

17. The optical fiber according to any one of claims 1 to 16, wherein a relative refractive-index difference of the average refractive index of the center core with respect to a refractive index of pure silica glass is equal to or higher than -0.50% and equal to or lower than -0.13%.

18. The optical fiber according to claim 16 or 17, wherein the transmission loss is equal to or lower than 0.175 dB/km.
